# EUROPEAN PATENT APPLICATION

(11) **EP 3 816 520 A1**
(43) Date of publication of application: **05.05.2021**
(21) Application number: 20000358.0
(22) Date of filing: 02.10.2020
(51) Int. Cl.: F24D 3/10, F24H 9/12, F16K 17/00, F16K 15/00

(54) **SAFETY DEVICE OF A DOMESTIC WATER SUPPLY SYSTEM COMPRISING A STORAGE HEATING SYSTEM**

(30) Priority: 02.10.2019 IT 201900003410 U
(71) Applicant: DK Service a company organized under the Laws of Italy, 28021 Borgomanero (NO) (IT)
(72) Inventor: TIENGO, Carolina, 28075 Grignasco (NO) (IT)
(74) Representative: Aprà, Mario

(57) **Abstract**

A safety device (V) of a domestic water supply system (I) comprising a storage heating system, hereinafter boiler (BO), characterized in that comprises a rigid body (1), which includes:
- a first cylindrical through cavity (CI), provided with:
- inferiorly, a first chamber (A1) and has an external thread (10) for connection to the domestic water supply system (I), relative to a cold water delivery pipe (T1) of said water supply system (I);
- in intermediate position, a baffle (11.1), provided with an intake through hole (11), in which a first valve seat (12) is formed;
- superiorly, a second chamber (A2), axially aligned and communicating hydraulically with said first chamber (A1), through said intake hole (11), and has, internally, a thread (13) for connection to the boiler (BO), and

- a second cylindrical cavity (C2), provided with:
- inferiorly, a third chamber (A3), open at the bottom and has, internally, a thread (16), wherein said third chamber (A3) communicates hydraulically with said first chamber (A1) through a by-pass channel (15) and has, superiorly, a shoulder (18);
- in intermediate position, a fourth chamber (A4), delimited superiorly by means of an integral baffle (19.1), provided with a discharge through hole (19), in which a second valve seat (20) is formed, while, under said baffle (19.1), said fourth chamber (A4) communicates with a discharge pipe (23), open toward the outside of the rigid body (1), and wherein said fourth chamber (A4) is axially aligned and communicating hydraulically with said third chamber (A3) and with said discharge hole (19) having said second valve seat (20);
- superiorly to said baffle (19.1), a discharge channel (21), which communicates directly with said second chamber (A2) and, through said discharge hole (19), with said fourth chamber (A4);

in that, moreover, it comprises:
- a non-return assembly (2), arranged in said second chamber (A2) and comprising first plug means (27) and a corresponding gasket (29), which produce a hydraulic seal on said first valve seat (12) and maintain said intake hole (11) normally closed;
- cap means (8, 8a, 8b, 8c, 8d), provided to close the lower part of said third chamber (A3);
- second plug means (5) with corresponding gasket (4), arranged in said fourth chamber (A4) and which are thrust in sealed condition against said second valve seat (20) by means of said fluid fed into said third chamber (A3) and/or by means of elastic means (6, M) arranged between said cap means (8, 8a, 8b, 8c, 8d) and said second plug means (5, O, 5a, 5c, 5d, 5e).

## Description

The present invention relates to a safety device of a domestic water supply system comprising a storage heating system.
The widespread use of small domestic water supply systems comprising a storage heating system, such as water heaters and the like, hereinafter for brevity called "boilers", has obliged manufacturers to make these boilers safe and efficient, as well as increasingly simple and economical, and above all easy to install. Today, anyone with a minimum knowledge of DIY can install a boiler, which can be found regularly stocked on the shelves of any DIY warehouse, as well as at more specialized retailers of heating and plumbing materials.
However, during installation of a boiler, which is a very simple operation, great care must be taken in particular to a device called safety valve, which is fitted in combination with the boiler and, more specifically, between the cold water delivery pipe and the boiler. The safety valve is usually purchased in combination with the boiler.
The safety valve is the device that limits the operating pressure of the boiler; this is because during operation of the boiler the water heated inside it cannot increase in volume and this creates an overpressure which, if not suitably limited, can cause the boiler to break and/or damage the domestic water supply system.
In substance, this safety valve consists of a loaded spring that exerts its action on a plug. The increase in pressure of the boiler in excess of the calibration value causes the plug to open and the excess fluid to escape through a specific discharge means of the valve.
The choice of safety valve, or rather the calibration of this valve, must be performed based on the operating pressure of the domestic water supply system in which this valve is fitted, but often this requirement is not taken into account. There are two reasons for failing to calibrate the safety valve.
The first is that very few people know the operating pressure of the domestic water supply system. In fact, measurement of this pressure requires the use of a gauge, which must be connected to the system. This measurement is only performed in cases of particular need.
It should be noted that the operating pressure value of the domestic water supply system can vary from less than 1 bar for older dwellings, with obstructed pipes located at a height with a high hydraulic head (old buildings without autoclaves or homes on hills), and possibly also at a considerable distance from the aqueduct (with consequent losses of load), to up to 6-7 bar for dwellings in lower urban areas and therefore lower than or close to the aqueduct, which may even have no pressure regulator.

know its calibration pressure. The calibration pressure of the most widely used standard safety valve model, depending on the manufacturer, can vary from a calibration of 2/3 bar up to 10/11 bar. This calibration parameter is known by wholesalers that purchase a batch of safety valves from the manufacturer, explicitly requesting a given calibration for the batch. However, when the single safety valve reaches the retailer and is sold, this parameter is not known by the final user, who is therefore unaware of the calibration value of the valve, and also often unaware of how this valve operates.
In fact, the user is only aware of the fact that a safety valve must be fitted in combination with the boiler. The result of this is that, on the one hand, some dissatisfied users see water being discharged through the safety valve of their system even when the boiler is switched off and, on the other hand, other users do not see water discharged through the safety valve of their system, but are unintentionally and unnecessarily stressing the domestic water supply system, sending it into overpressure, which can cause the boiler to break down and also hidden leaks in the system. In fact, it has been proven that water supply systems that are subjected to higher pressure regimes are much more likely to have broken pipes and leaks from couplings and fittings.
An object of the present invention is to provide a safety device of a domestic water supply system comprising a storage heating system, connected to a water distribution network, wherein calibration of the safety device takes place autonomously in relation to the pressure value of the water supply network and can adapt constantly in the case of variations of the water pressure of this network.
Another object of the present invention is to provide a safety device of a domestic water supply system comprising a storage heating system which has a simplified structure, is safe and reliable to operate and requires limited technical and economic expenditure.
In view of these objects, the present invention provides a safety device of a domestic water supply system comprising a storage heating system, the essential features of which form the subject matter of claim 1.
Further advantageous features of the invention are described in the dependent claims.

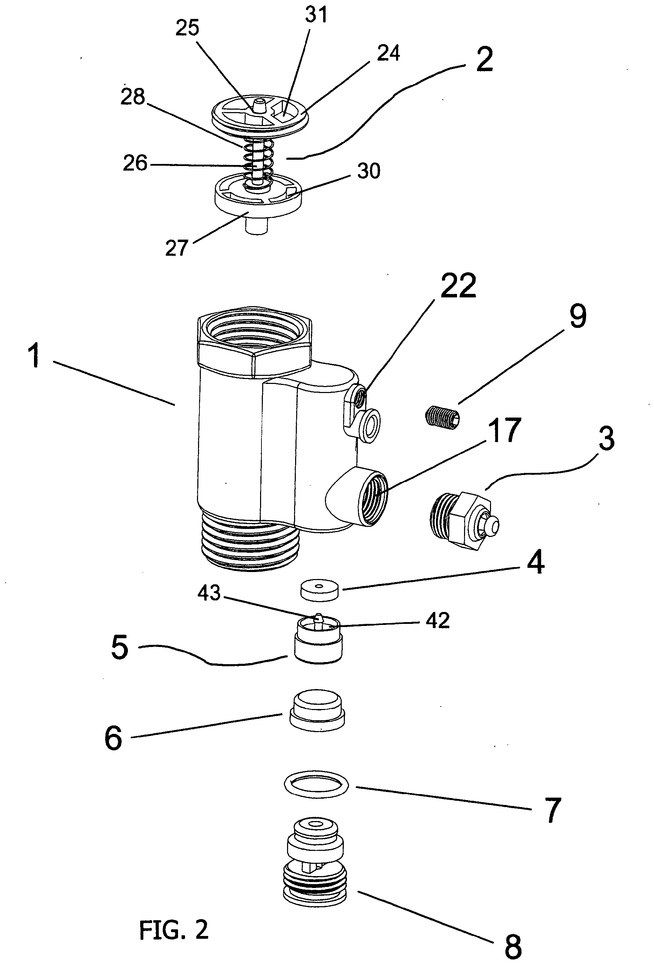

Features and advantages of the invention will be more apparent from the detailed description below of an example of embodiment, with reference to the accompanying drawing, which shows important details for the invention, and from the claims.
The features illustrated here are not necessarily drawn to scale and are represented so that the distinctive features according to the invention are clearly highlighted.
The various features can be produced individually or in any combination with one another, as variants of the invention.
In the drawing:
- Fig. 1 is a partial perspective view of the safety device according to an example of embodiment, installed in a domestic water supply system comprising a storage heating system;
- Fig. 2 is an exploded perspective view of the safety device of Fig. 1;
- Fig. 3 is an elevational view of the safety device of Fig. 1;
- Fig. 4 is a sectional view along the line A-A of Fig. 3, illustrating only the body or casing of the safety device of Fig. 3;
- Fig. 5 is a sectional view along the line A-A of Fig. 3, illustrating the safety device of Fig. 3 complete with all its parts, in normal operating condition;
- Figs. 7, 18, 20, 22, 24, 26, 30, 32, 33, 35, 37, 39, 41, 43, 45, 47 and 49 are sectional views similar to the view of Fig. 5, but illustrating different operating conditions or variants of embodiment of the safety device of Fig. 5;

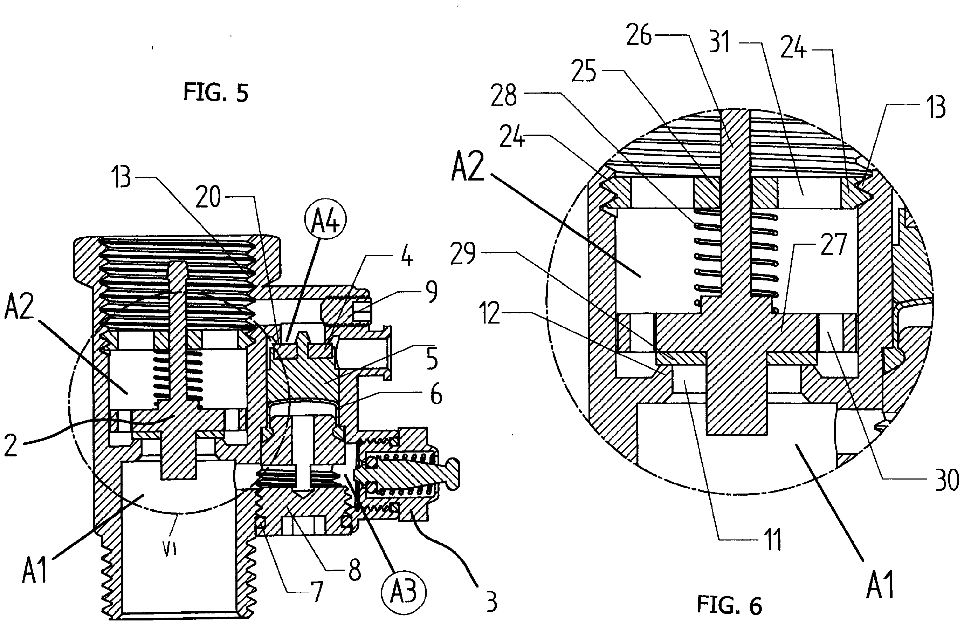

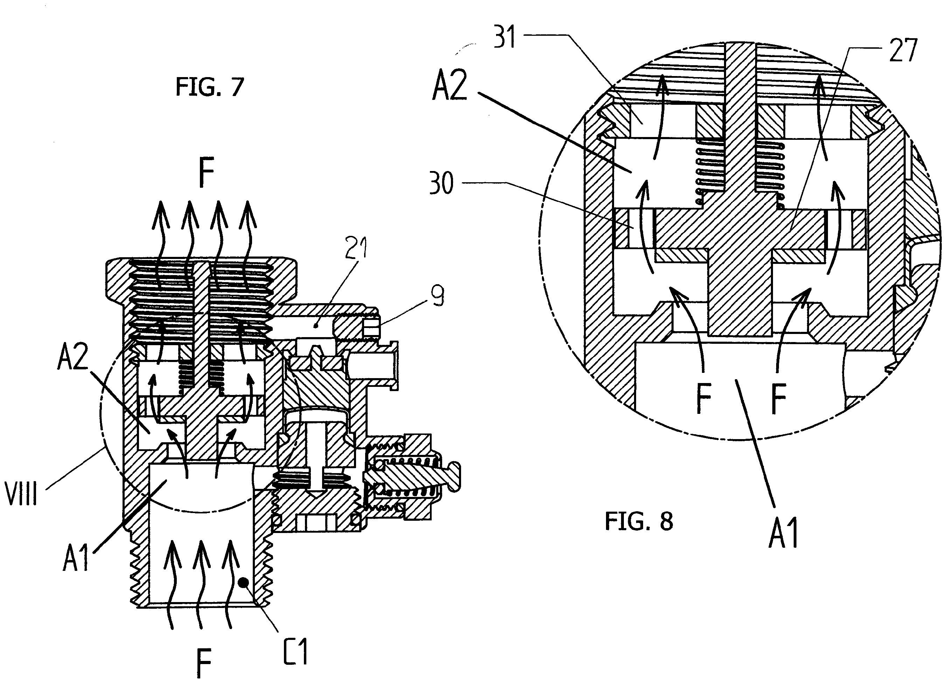

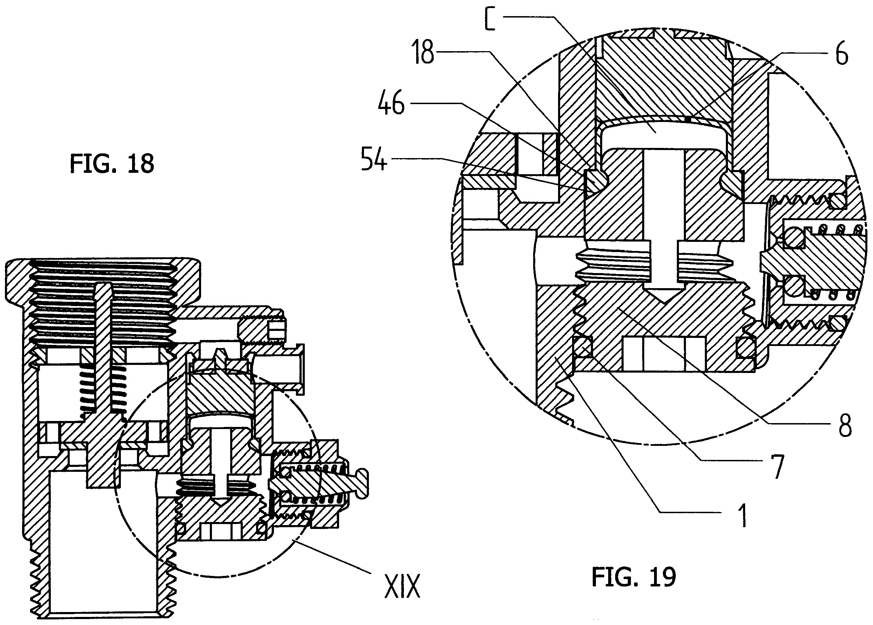

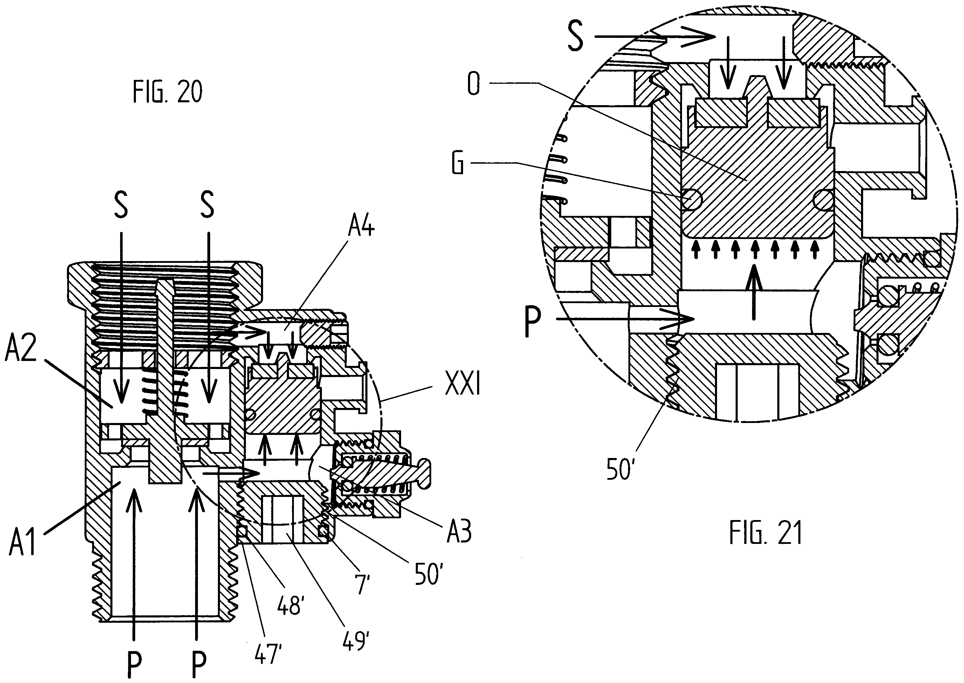

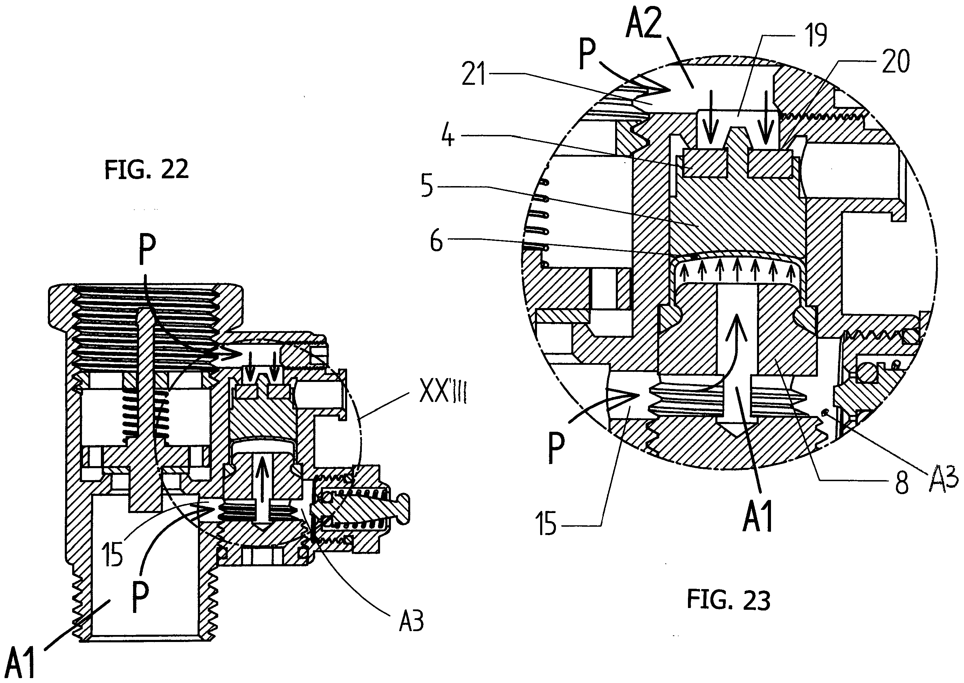

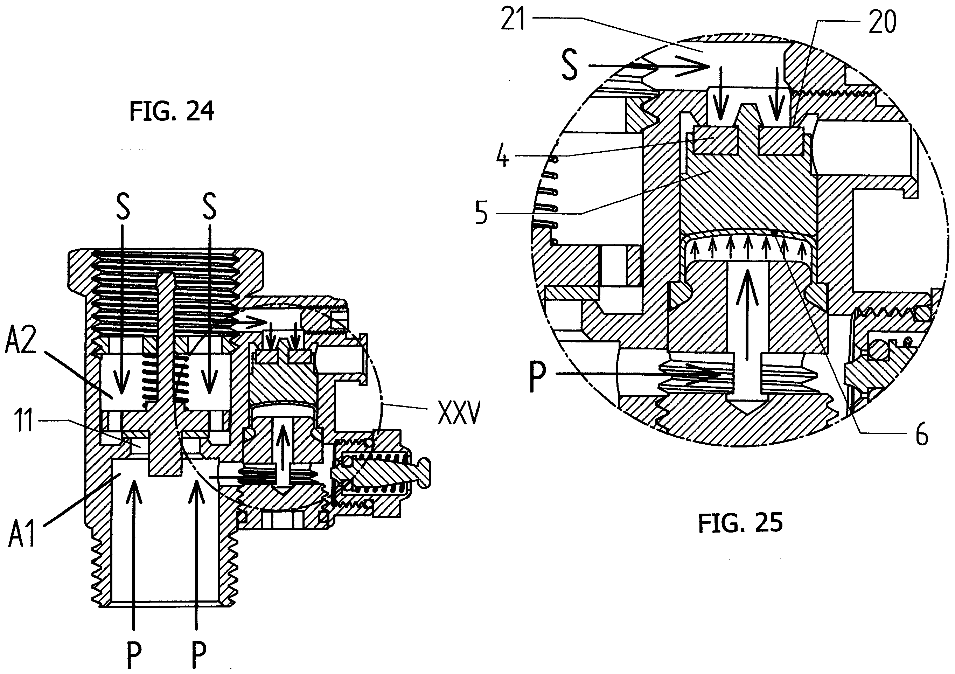

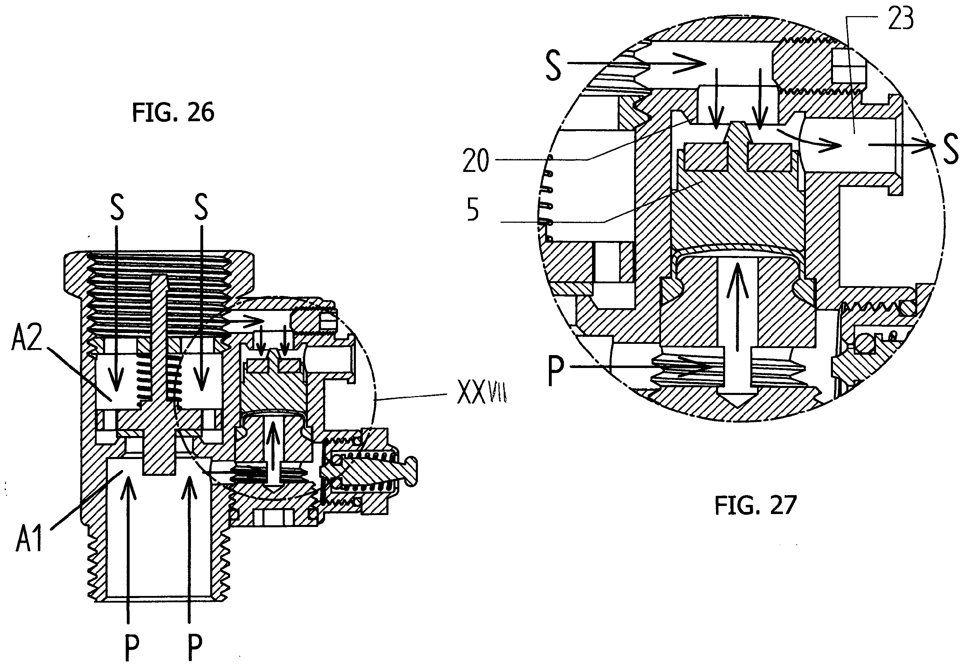

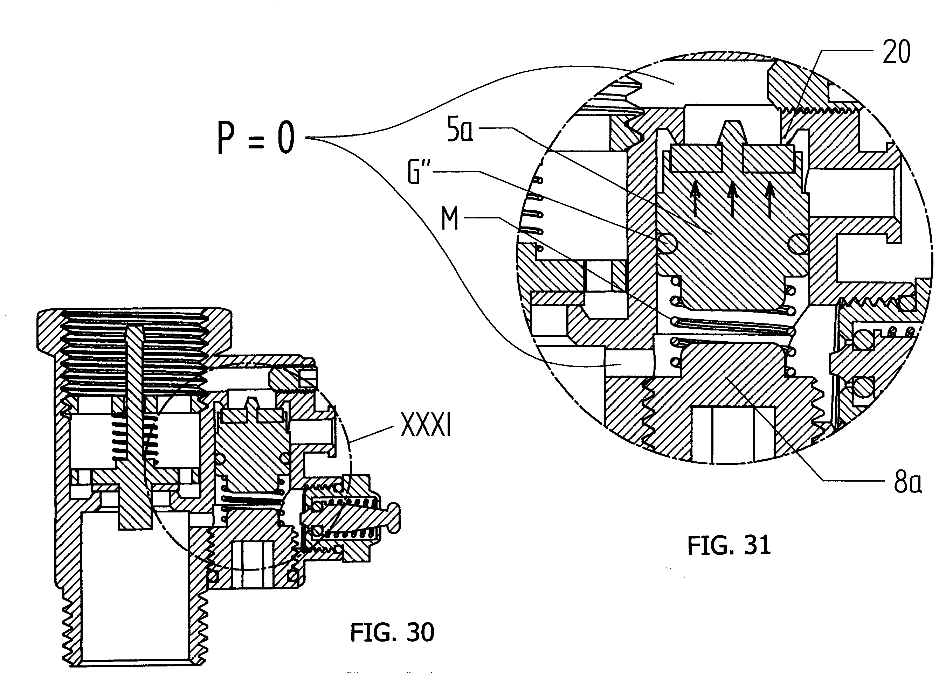

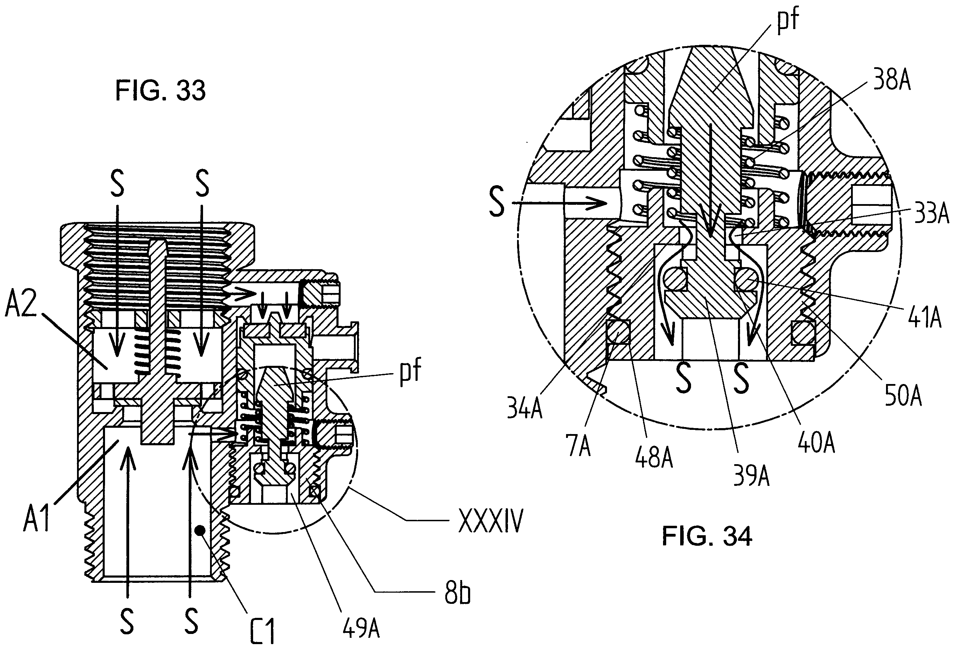

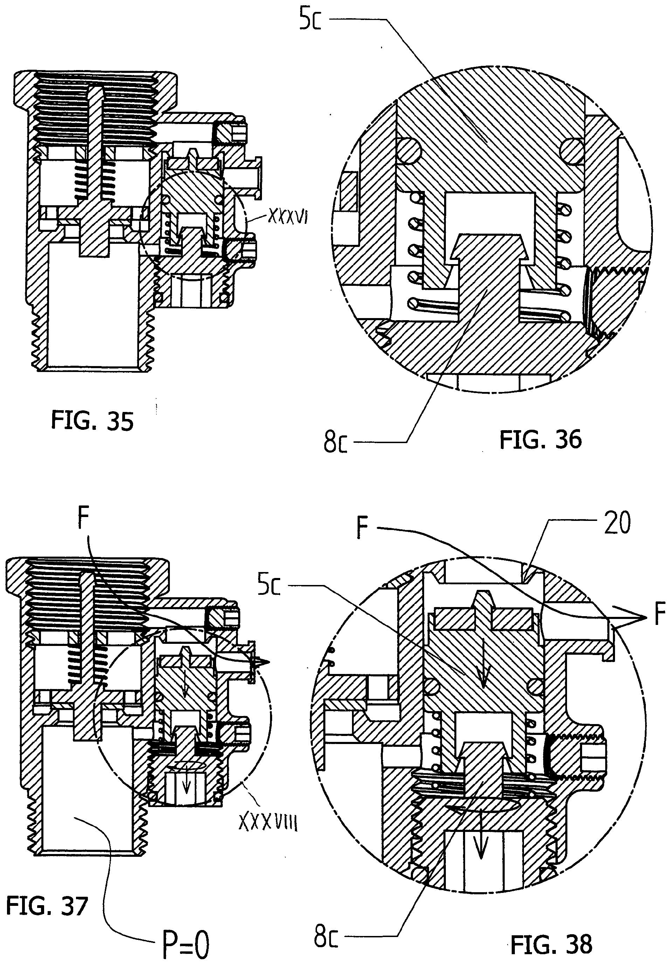

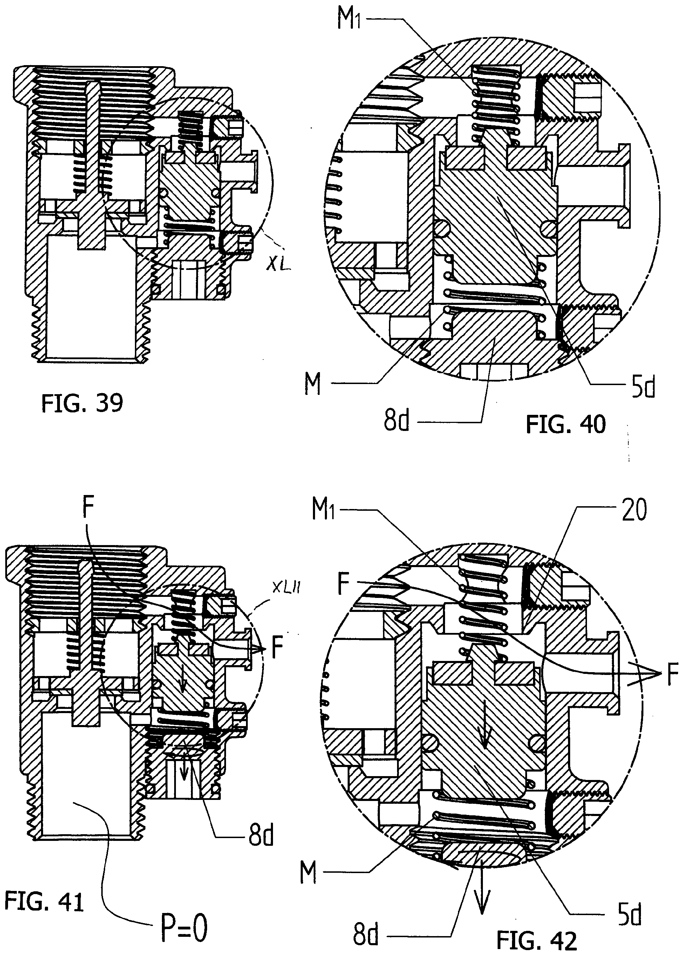

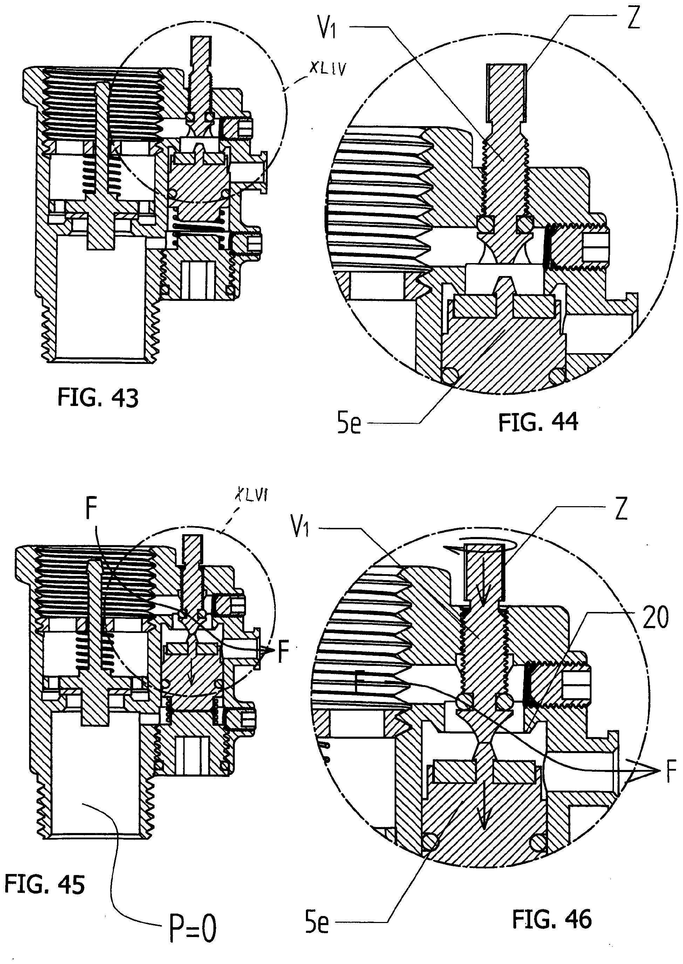

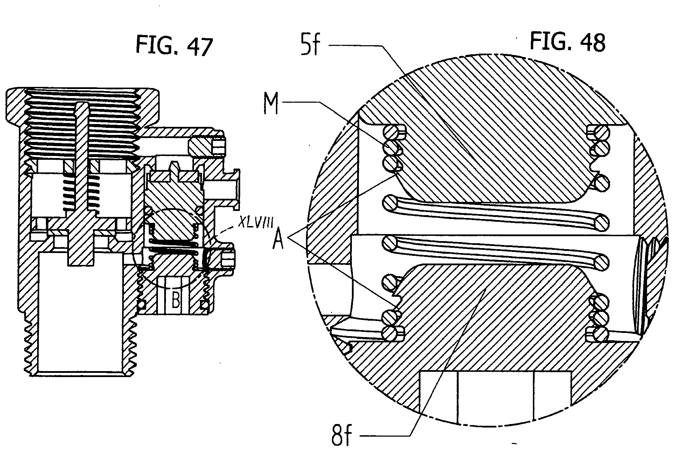

- Figs. 6, 8, 19, 21, 23, 25, 27, 31, 34, 36, 38, 40, 42, 44, 46, 48, 50 are enlarged detailed views according to the respective details VI of Fig. 5, VIII of Fig. 7, XIX of Fig. 18, XXI of Fig. 20, XXIII of Fig. 22, XXV of Fig. 24, XXVII of Fig. 26, XXXI of Fig. 30, XXXIV of Fig. 33, XXXVI of Fig. 35, XXXVIII of Fig. 37, XL of Fig. 39, XLII of Fig. 41, XLIV of Fig. 43, XLVI of Fig. 45, XLVIII of Fig. 47 and L of Fig. 49;

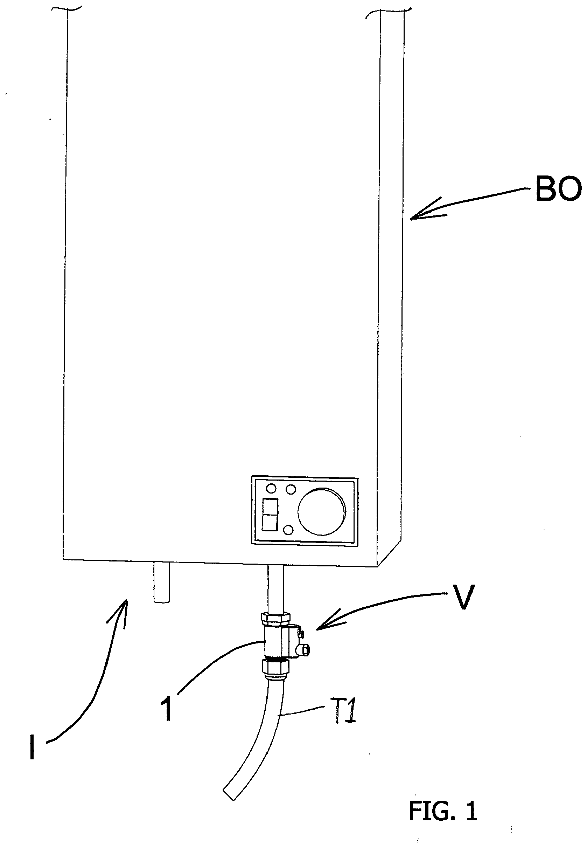

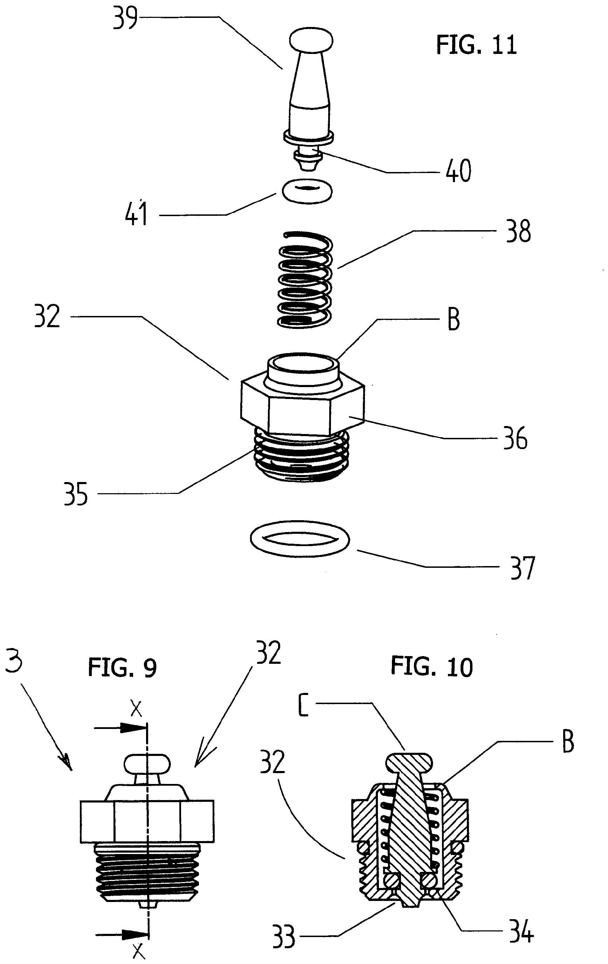

- Figs. 9, 10 and 11 are, respectively, elevational, sectional along the line X-X of Fig. 9 and perspective exploded views of a maximum pressure limiting device included, in some embodiments, in the safety device of Fig. 1;

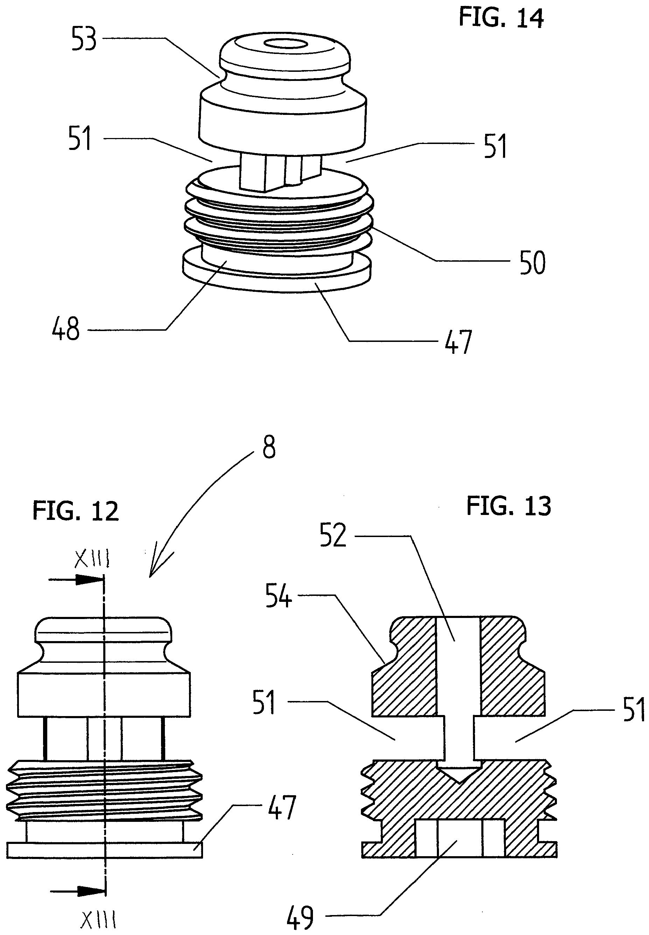

- Figs. 12, 13 and 14 are, respectively, elevational, sectional along the line XIII-XIII of Fig. 12 and perspective exploded views of a distributor included in the safety device of Fig. 1;

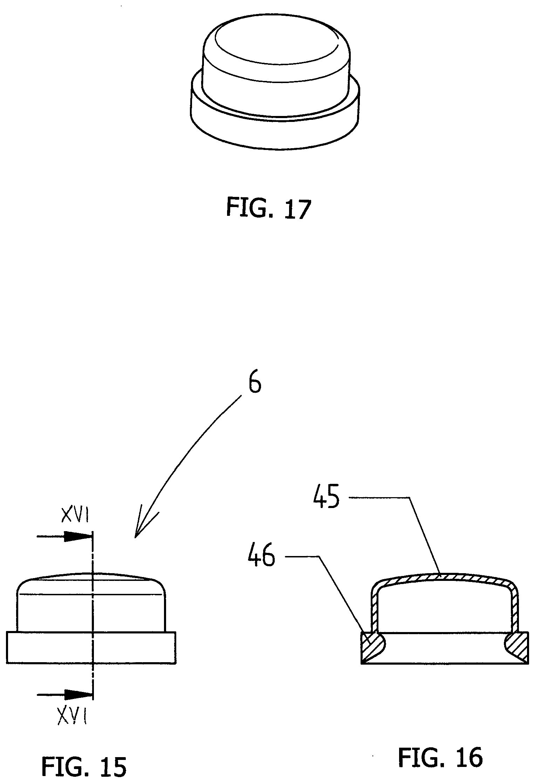

- Figs. 15, 16 and 17 are, respectively, elevational, sectional along the line XVI-XVI of Fig. 15 and perspective exploded views of a membrane included in the safety device of Fig. 1;

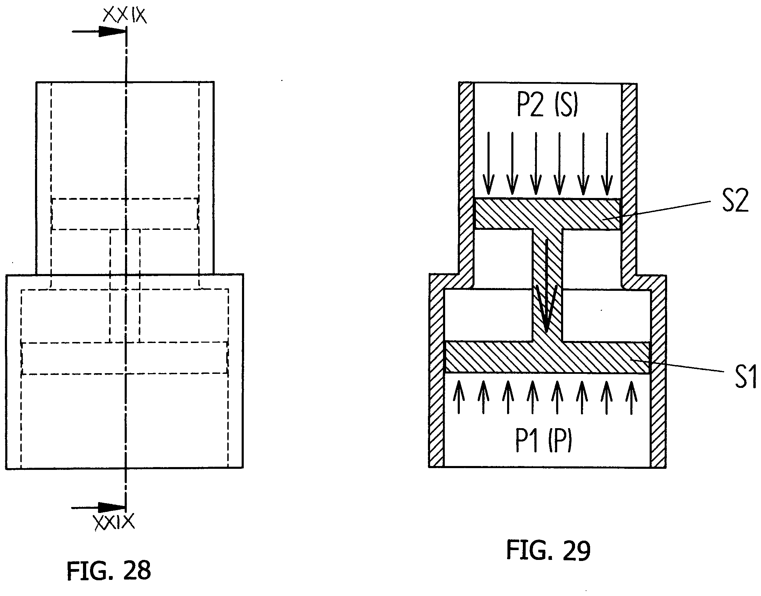

- Fig. 28 is a schematic elevational view of a hydraulic chamber with two opposed pistons, analogically illustrating the operation of the safety device according to the present invention;
- Fig. 29 is a sectional view along the line XXIX-XXIX of Fig. 28.
With reference to the drawing, the reference I (Fig. 1) indicates a domestic water supply system (represented only partially), connected to a water distribution network and comprising a storage heating system BO (hereinafter, for brevity, boiler BO) through a safety device V.
Said safety device V comprises (Figs. 2 to 4) a rigid metal body 1, which includes:
- a first cylindrical through cavity C1 provided with:
   - inferiorly, a first chamber A1 and has an external male thread 10 for connection to the water supply system, in particular relative to the cold water delivery pipe T1 of the water supply system I,
   - in intermediate position, an integral baffle 11.1, provided with an intake through hole 11 and in which a valve seat 12 is formed,
   - superiorly, a second chamber A2 axially aligned and communicating hydraulically with said first chamber A1, through said intake hole 11, and has, internally, a female thread 13 for connection to the boiler BO and, externally, a hexagonal crown 14 for the tightening key, and
- a second cylindrical cavity C2 provided with:
   - inferiorly, a third chamber A3, open at the bottom and has, internally, a thread 16 for fitting a distributor cap 8 (Fig. 2), wherein said third chamber A3 communicates hydraulically with said first chamber A1 through a by-pass channel 15 and has, laterally, a through hole 17, opposite said by-pass channel 15 and internally threaded for fitting a maximum pressure limiting device 3 (Fig. 2), and, superiorly, a shoulder 18;
   - in intermediate position, a fourth chamber A4, delimited superiorly by means of a integral baffle 19.1, provided with a discharge through hole 19 and in which a valve seat 20 is formed, while under said baffle 19.1, said fourth chamber A4 communicates with a lateral discharge pipe 23, open toward the outside of the rigid body 1; and wherein said fourth chamber A4 is axially aligned and communicating hydraulically relative to said third chamber A3 and to said discharge hole 19 with said valve seat 20;
   - superiorly to said baffle 19.1, a cylindrical discharge channel 21, open laterally toward the outside of the rigid body 1, at an internally threaded end 22 and designed to receive a cap 9 (Fig. 2), wherein said discharge channel 21 communicates axially directly with said second chamber A2 and radially with said fourth chamber A4 through said discharge hole 19.

In the embodiment illustrated, the axes of said cavities C1, C2 and of the corresponding pairs of chambers A1, A2 and A3, A4 are parallel to each other.
It should be noted that the expressions "inferiorly", "superiorly", "lower" and "upper" refer to the direction of water flow supplied to the boiler BO through said safety device V connected relative to the cold water delivery pipe T1 of the system I.
In Fig. 2, the reference number 2 indicates a non-return assembly, which has the purpose of preventing backflow of the hot water produced in the boiler BO into the cold water circuit. In particular, said non-return assembly 2 is arranged in said second chamber A2 and comprises, according to the example of embodiment illustrated (Figs. 5 and 6), an externally threaded ring nut 24 provided with a central hole 25, into which an axial stem 26 of a disc shaped plug 27 in is inserted and guided, while a compression coil spring 28 is arranged between said plug 27 and said ring nut 24, coaxially relative to the stem 26. Plug 27 and ring nut 24 are provided with openings 30 and 31, respectively, to allow the passage of fluid. With reference to Figs. 5 and 6, said ring nut 24 of the non-return assembly 2 is screwed until the internal thread 13 of the rigid body 1 bottoms out and determines a slight preloading of the spring 28, which in turn thrusts the disc of the plug 27 downward and holds an annular gasket 29, coaxial to and under said disc 27, tightly to produce a hydraulic seal on the valve seat 12 and maintaining the intake hole 11 from the first chamber A1 to the second chamber A2 normally closed.
With reference to Figs. 7 and 8, with the boiler BO in operation and when the user draws hot water, the flow F of cold water enters the first chamber A1 of the first cavity C1, lifts the disc 27 and passes through the passages 30 of said disc 27 and 31 of the ring nut 24, entering the boiler BO through said second chamber A2. However, if hot water is not drawn and therefore with the flow F stopped, the water contained in the boiler BO cannot flow out through said first cavity C1, as due to the return spring 28 the non-return assembly 2 closes automatically when the pressure of the water in the second chamber A2, i.e., the part of the water supply system containing the hot water produced in the boiler BO, is equal to or greater than the pressure in the first chamber A1, i.e., the part of the water supply system containing the cold water that supplies the boiler BO.
In this way, the entire water supply system I is thermally isolated against backflows of hot water into the cold water circuit, but above all is protected against the effects of the pressure produced by the volumetric expansion of the water heated in the boiler BO, which, if not appropriately limited, would have a negative effect on the entire domestic water supply system, compromising its integrity and tightness in its weakest points.

Also with reference to Figs. 9 to 11, these illustrate the maximum pressure limiting device 3, engaged with seal in the threaded hole 17 of the third chamber A3 of the rigid body 1. Said maximum pressure limiting device 3 is substantially a miniaturized safety valve of the type used in coffee machines, pressure cookers, domestic and professional kettles, steam generators, pneumatic systems, etc. The discharge volumetric flow rate of these micro-devices is in the order of a few l/min, hence more than sufficient for the present invention, also as this micro-device does not require to directly discharge the water that expands from the boiler BO, but only to offset any losses of the non-return assembly 2, which if not detected, would send the entire domestic water supply system I into overpressure.
Said maximum pressure limiting device 3 comprises a cap 32, internally hollow and having a discharge orifice 33 with related inner sealing seat 34, and has an external thread 35 and a hexagonal head 36, and comprises a gasket 37. A spring 38 and a rod-shaped plug 39, with groove 40 for a gasket 41, are contained in the cavity of the cap 32.
Operation of this limiting device 3 is based on the action of the preloaded spring 38, which exerts its action on the plug 39, which, due to the interposition of the gasket 41, makes a hermetic seal on the sealing seat 34, maintaining the discharge orifice 33 normally closed. The seal inside the cap 32 of the plug 39, complete with gasket 41 and of the spring 38, is guaranteed by a rim B present on the free end of the cap 32, said rim being firstly cylindrically turned, as shown in in Fig. 11, and then bent over itself with a clinching operation (Fig. 10). Hereunder the safety device V is described with reference to the sealing system with autonomous calibration according to the present invention.
With reference to Figs. 2, 5 and also to Figs. 12 to 16, said distributor cap 8, which is arranged in the third chamber A3, is provided, at its lower end, with a head 47 having an external annular seat 48 for an annular sealing gasket 7, or O-ring, a hexagonal socket 49 for a hex key and an external thread 50. Moreover, said distributor cap 8 has, in intermediate position, symmetrical openings 51, communicating radially with a blind axial hole 52, which ends at the upper part of the cap 8, while it has a lateral groove 53 and shoulder 54.
Also with reference to Figs. 15 to 17, the reference number 6 indicates an elastic membrane, for example made of elastomer and having a cover structure, closed at the top 45, with cylindrical lateral part having at the base a rim 46, projecting outward and inward and which acts as ring gasket.
Said membrane 6 is elastically fitted with its rim portion 46 into the groove 53 of the distributor cap 8, against the shoulder 54 of this cap.

Also with reference to Figs. 18 and 19, said distributor cap 8 with cover membrane 6 is inserted into said third chamber A3 of the rigid body 1 and its thread 50 is engaged by screwing into the corresponding internal thread 16 of the rigid body 1. The shoulder 54 compresses the rim 46 of said membrane 6 against the corresponding upper shoulder 18 of said third chamber A3.
Also with reference to Fig. 2, the reference number 5 indicates a plug, for example made of metal, arranged to move, with seal, in the said fourth chamber A4 of the rigid body 1. Said plug 5 is provided, superiorly, with an annular housing 42 with axial pin 43 to prevent its removal. An annular sealing gasket 4 is arranged and retained in said housing 42 of the plug 5 and, normally, rests tightly against the valve seat 20 of said fourth chamber A4, as will be more apparent below.
In particular, said plug 5 with gasket 4 is inserted into said fourth chamber A4 of the rigid body 1 with sliding coupling and is arranged above said cover membrane 6 (Figs. 18, 19).
It should be noted that the distributor cap 8, besides hermetically closing on the rigid body 1 due to the gasket 7, determines a constant pressure on the rim 46 of the membrane 6 against the upper shoulder 18 of the third chamber A3 of the rigid body 1, producing a hydraulic seal inside the device V, between said distributor cap 8 and said shoulder 18 of the third chamber A3, due to the elastic property of the membrane 6.
Moreover, said membrane 6 elastically urges, from below, said plug 5 and, in particular, the related gasket 4 against the valve seat 20, tightly closing said fourth chamber A4 (Fig. 5).
It should be noted that the threaded cap 9 (Figs. 2 and 7) has the sole purpose of hermetically closing the passage 22, which is constructively necessary for insertion of the cutter bit to produce the discharge channel 21.
Fig. 5, for example, illustrates the present invention in its entirety.
Plug 5 and membrane 6 can be produced with different configurations.
In Fig. 5, it can be noted, for example, that the top of the cover membrane 6 is convex (see also Fig. 16), to better facilitate its deflation and consequently its depression when the plug 5 pushes thereon, as will be more apparent below.
Alternatively, with reference to Figs. 20 and 21, according to the invention a plug O is provided, configured as a piston sliding in the fourth chamber A4 with seal guaranteed by an O-ring gasket G. In this case, a distributor cap 8 as described will not be necessary; a conventional cap for closing the bottom of the chamber A3 will be provided, at its lower end, with a head 47' with annular seat 48' for an annular sealing gasket 7', or O-ring, a hexagonal socket 49' for a hex key and an external thread 50'.

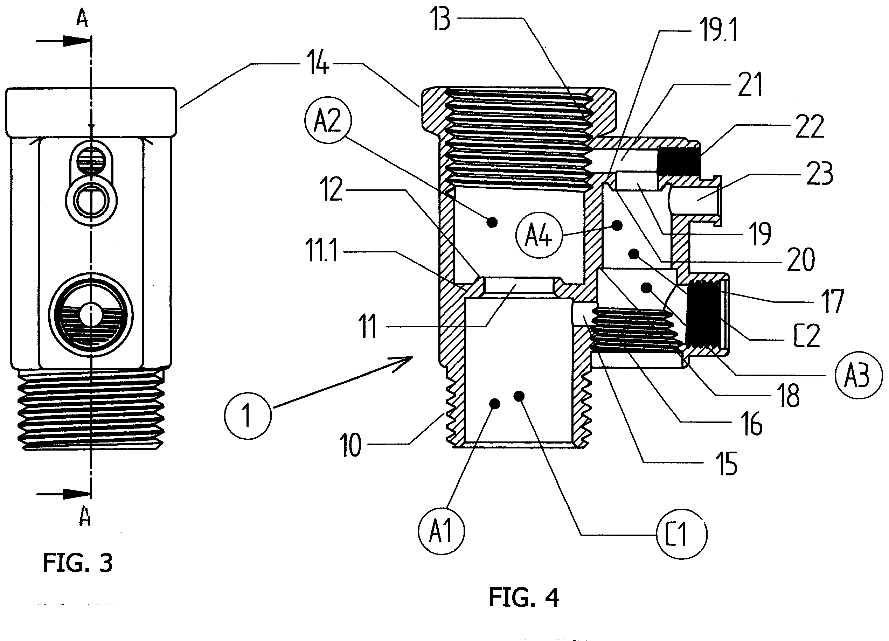

Operation of the present invention is very simple.
The device V is installed relative to the cold water delivery pipe T1 and to the boiler BO of the system I and initial filling of the storage tank of the boiler BO takes place. In the exact moment in which the boiler BO reaches saturation, the device V is also subjected to the operating pressure of the system and is instantly autonomously calibrated to the optimal pressure value for the system without any action by the operator.
In fact, with reference to Figs. 22 and 23, the fluid, which exerts the same operating pressure P of the system in all directions, passes from the first chamber A1, through the by-pass channel 15, also into the third chamber A3, where it passes through the distribution cap 8 (openings 51 and axial hole 52; Fig. 13) and penetrates and swells the membrane 6, which in turn, always with the same pressure P, presses against the plug 5, which in the fourth chamber A4 has the function of guaranteeing, by means of its gasket 4, the hydraulic seal on the valve seat 20, maintaining the through hole 19, which has a smaller inner diameter than the inner diameter of said fourth chamber A4, normally closed (as is clearly visible in Fig. 4).
This difference of the two diameters, the inner diameter of the fourth chamber A4 and the inner diameter of the discharge hole 19, where the same pressure P of the fluid in the system I is always exerted through the discharge channel 21 (Fig. 23), determines, with the boiler BO switched off, a differential of opposing forces acting on the plug 5, which allows said plug 5 to be maintained pressed against the respective valve seat 20 (through the gasket 4), maintaining the passage 19 normally closed and consequently determining autonomous regulation of the calibration of the device based on the operating pressure of the system I. The boiler BO can then be switched on; the water contained therein will start to heat up (at different speeds depending on the type of power used by the boiler BO), but as the heated water cannot expand naturally as it is enclosed in the hot water circuit (second chamber A2, discharge channel 21), the pressure will increase.
At this point, if the fluid subjected to an overpressure, due to operation of the boiler BO, cannot find a natural escape route, deriving from hot water being drawn by the user, due to the incompressible nature of liquids, it will affect not only the boiler BO, but according to the diagram of Figs. 24 and 25, and by virtue of Pascal's principle, the second chamber A2 and related discharge channel 21, i.e., the entire hot water circuit of the system I. However, inside the device V, the non-return assembly 2, which closes the intake hole 11, does not allow the backflow of hot water into the first chamber A1 and consequently into the cold water delivery pipe T1, which supplies the boiler BO, as the pressure that prevails in the second chamber A2 is greater than the pressure that prevails in the first chamber A1. Nonetheless, the overpressure S present in the discharge channel 21 (Fig. 25) is also exerted on the plug 5, which closes the discharge hole 19 with the gasket 4 on the respective valve seat 20. Moreover, at a predetermined overpressure S value, the plug 5, which has become a weak point of the system I and consequently a potential point of escape of the pressurized water, will open, as illustrated in Figs. 26 and 27, allowing the volume of water that caused this overpressure S to flow out of the rigid body 1 through the discharge pipe 23.
In practice, also with reference to Figs. 26 and 27, the overpressure S present in the second chamber A2 and related discharge channel 21, i.e., in the hot water branch of the system I, has overcome the pressure P present in the first chamber A1, i.e., in the cold water branch of the system I. This means that the differential of opposing forces, which maintained the plug 5 normally closed with the boiler BO switched off, has been overcome by the differential pressure that was produced with the boiler BO operating.
The plug 5 will close again immediately after the pressure in the hot water branch of the system I returns within the pre-set values.
Regardless of the initial pressure P value of the system I, the plug 5 will thus only open after having exceeded a given overpressure S, not absolute but relative, i.e., in compliance with the operating pressure P already existing in the system I and which is normally also exerted on the plug 5.
Therefore, it can be understood that the system for autonomous regulation of calibration of the device V according to the present invention described herein can be compared to a hydraulic system with two opposed and integral pistons having different diameters, as illustrated in Figs. 28 and 29, in which in order to obtain downward movement of the pistons the pressure P2 (i.e., the overpressure S) exerted on the smaller surface S2 must be greater than the pressure P1 (i.e., the operating pressure P) exerted on the larger surface S1, because, as by definition pressure P is the ratio between a force F and the surface S on which it is distributed, as the pressure P2 is distributed over a smaller area than that of P1, it must be greater.
With the surface S1 larger than S2 this will guarantee at all times that the system has a closing preload margin (as occurs in spring systems) and that it remains closed even when the boiler BO is switched off, i.e., - according to the analogy indicated above - when the pressures acting on the pistons are identical.
Therefore, during construction, the diameter of the discharge hole 19 can be varied in relation to the inner diameter of the fourth chamber A4, or more precisely in relation to the diameter of the support surface between membrane 6 and plug 5, as it is possible to decide by what percentage value the overpressure S must exceed the operating pressure P normally present in the system I, in this way subjecting the hot water circuit of the water supply system to the least possible stress.
In an improvement of the present invention, a spring M is fitted inside the membrane 6 to prevent deflation thereof if the water supply is cut off. However, for the version illustrated in Figs. 20 and 21, this spring M is highly recommended and consequently fitted according to the teachings of Figs. 30 and 31.
In fact, in these cases, with the pressure P of the system at zero, the differential of force that maintains the plug 5 on the valve seat 20 normally closed is lacking, so that the device V according to the invention would tend, even under the effect of the limited hydraulic head of the tank of the boiler BO, to release the supply of water contained therein, which would produce a senseless waste of water.
If the membrane 6 is particularly thin and structurally unable, even with no pressure P, to ensure a minimum residual opposing force to maintain the plug 5 closed, it is advisable to fit a spring or other elastic body that provides the minimum force required to maintain the plug 5 closed on the respective seat 20.
According to the present invention, the maximum pressure limiting device 3, described previously, is provided, and has the function of protecting the entire system. In fact, very often in all boiler safety valves, the non-return assembly, indicated above with 2, is damaged or fails to close for various reasons: sediments, limescale and rust present on the valve closing seats and on the movement of the plug, normal wear of the rubber, hardening or aging thereof, failure of the plastic ring nut caused by the nipple during boiler connection operations. In these conditions, the fluid in overpressure produced by the boiler, seeping through the aforesaid malfunctioning assembly, flows back into the cold water branch from which it arrived, which is at a lower pressure, with negative effects on the entire domestic water system. Moreover, in order to remain at the correct temperature the boiler will start to stay on for longer periods, dissipating part of its thermal energy along the cold water delivery pipe and the user will continue to use the boiler, without realizing that the pressure of the system, particularly when no hot water is being drawn, increases greatly, causing the discharge of the safety valve to trigger only when the entire domestic water supply system is at the calibration pressure of this valve. However, this discharge, with current safety valves, will always and in any case be interpreted as normal discharge of the valve, attributable only to the overpressure produced by the boiler, and not to the overpressure present in the entire system. Theoretically, the overpressure S present in the entire system should be absorbed by the water supply network from the aqueduct, but in actual fact this cannot occur, or rather must not occur, as current health and hygiene legislation on the subject of water installations establishes that one or more non-return valves must be fitted upstream of each utility by the public drinking water network, i.e., at each connection point, to prevent contamination of the public water supply network due to backflows caused by counterpressures coming from any utility, consisting of backflows of domestic water or, even more dangerously, of recirculating water from heating systems, having a high polluting and contamination potential.
Therefore, it is evident that in order to prevent damage to the domestic system, any counterpressures that are not controlled by malfunctioning safety valves of boilers within a utility must be detected as early as possible and their cause must be eliminated, as they cannot be discharged or be absorbed by the network.
Therefore, unlike common safety valves for boilers present on the market, to overcome these problems, caused by a malfunctioning non-return system, the present invention also has a maximum pressure limiting device 3, which is in communication with the third chamber A3 and, through the by-pass channel 15, with the first chamber A1 and consequently with the entire domestic water supply system I. Besides protecting the entire system in good time, by discharging the volume of water responsible for the overpressure S, this device allows easy monitoring of the entire domestic water supply system I. In practice, when detecting drips from the pressure limiting device, the user will know that the safety device must be replaced, as the non-return assembly contained therein is no longer doing its duty, as it is no longer able to retain the overpressure S caused by heating of the boiler BO.
Furthermore, this maximum pressure limiting device 3 will allow particularly scrupulous users to perform a quick test of its operation, simply by pulling the tail C of the plug 39 (Figs. 9 to 11) which extends outside the rigid body 1 of the device V.
The present invention has some variants of embodiment, indicated below.

### First variant of embodiment

As already explained with reference to Figs. 30 and 31, as an alternative to the membrane 6, it is possible to use a piston 5a with sealing gasket G", which also acts as plug on the valve seat 20. The spring M fitted between cap 8a and piston 5a always and in any case guarantees a minimum closing force even in the case of pressure P drop.

### Second variant of embodiment

The maximum pressure limiting device 3 can also be omitted, obtaining a simpler and more economical configuration of the invention.

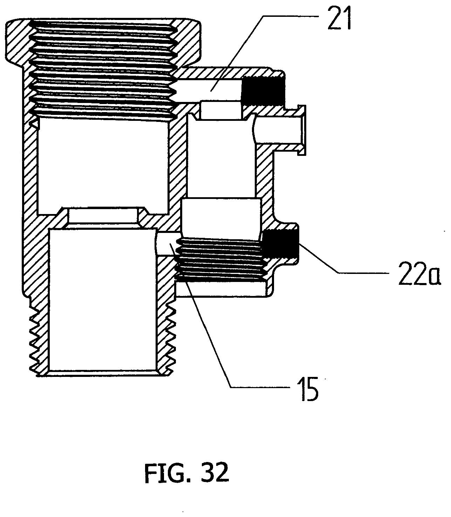

In this case, with reference to Fig. 32, the through hole essential for the cutter bit to create the passage 15 provided with thread 22a will be closed in the same way as the hole 21 with a cap (omitted in the drawing). This configured is suitable for systems capable of absorbing any overpressures, such as the hydraulic systems of handicraft and industrial businesses, which according to law must be provided upstream with disconnecting devices adapted to discharge the overpressures produced within the system directly into the waste water network.

### Third variant of embodiment

The maximum pressure limiting device 3 can also be integrated inside the rigid body 1 of the device V. The maximum pressure limiting device 3 can be integrated, according to Figs. 33 and 34, in a closing cap 8b provided with a hexagonal socket 49A for a hex key, with a seat 48A for an O-ring 7A, with a through orifice 33A and with an external thread 50A. The hexagonal socket 49A for the hex key is advantageously also used to obtain a valve seat 34A, on which the plug 39a closes,

The function of emptying the boiler can also be facilitated with a spring repelling system. The system has a first spring M, arranged between a cap 8d and a plug 5d, and a second spring M1, above said plug 5d and which has the task of disengaging the plug 5d if, by unscrewing the cap 8d, the first spring M ceases to exert its driving force. The flow F will thus be free to drain out through the discharge.

### Sixth variant of embodiment (Figs. 43 to 46)

The function of emptying the boiler can also be implemented with an external control, for example through a screw V1.

The screw V1 is provided with knurling Z to be gripped manually and can act by pressing axially on the piston-plug 5e, or in a different configuration can, for example, interact normally thereon like a cam.

By controlling the screw V1, always after having closed the boiler supply tap, the piston-plug 5e will be disengaged from the valve seat 20 with consequent discharge of the flow F.

### Seventh variant of embodiment (Figs. 47 to 50)

The function of emptying the boiler can be implemented according to Figs. 47 to 50.

After compression of the spring M between cap 8f and piston-plug 5f, the first neutral turns of the spring M, as indicated in the detail of Fig. 48, will be engaged with force on claws A, produced both on the cap 8f and on the piston-plug 5f, which will consequently be connected to each other through this spring M.

To empty the boiler, the boiler supply tap is closed as usual and the cap 8f is unscrewed, which, as indicated in the detail of Fig. 50, tensions the spring M, which in turn disengages the piston-plug 5f from the valve seat 20, allowing the flow F to drain.

As can be seen from the foregoing, with the present invention it is possible to achieve the objects set forth in a simple and effective manner.

Calibration of the safety device V according to the present invention will always be correctly adapted to the operating pressure of the water supply system to which it belongs, regardless of the area in which the dwelling is located (altitude and distance from the aqueduct), adapting to the system, whether this is in a state of obsolescence (hence no longer suitable to withstand high stresses) or is new, has been renovated or undergone modifications of any type, which have varied the operating pressure.

The water supply system will no longer be stressed needlessly (by an over-calibrated device), but only to the minimum extent required to guarantee correct operation of the boiler while preventing the discharge of large amounts of water from the device V (typical of an under-calibrated device), and annoying flooding of the floor.

Moreover, the device V will also be equipped with a high pressure limiting device having the purpose of indicating malfunction of the device, safeguarding the entire water supply system of the dwelling in good time, protecting it from any overpressure caused by failed closing of the non-return device, an element present in all boiler safety valves and which has the purpose of preventing backflow of hot water from the boiler toward the cold water supply circuit, and which often has undetected leaks.

## Claims

1. A safety device (V) for a domestic water supply system (I) comprising a storage heating system, hereinafter boiler (BO), **characterized in that** it comprises a rigid body (1), which includes:
- a first cylindrical through cavity (C1), provided with:
- inferiorly, a first chamber (A1) and has an external thread (10) for connection to the domestic water supply system (I), relative to a cold water delivery pipe (T1) of said water supply system (I);
- in intermediate position, a baffle (11.1), provided with an intake through hole (11), in which a first valve seat (12) is formed;
- superiorly, a second chamber (A2), axially aligned and communicating hydraulically with said first chamber (A1), through said intake hole (11), and has, internally, a thread (13) for connection to the boiler (BO), and
- a second cylindrical cavity (C2), provided with:
- inferiorly, a third chamber (A3), open at the bottom and has, internally, a thread (16), wherein said third chamber (A3) communicates hydraulically with said first chamber (A1) through a by-pass channel (15) and has, superiorly, a shoulder (18);
- in intermediate position, a fourth chamber (A4), delimited superiorly by means of an integral baffle (19.1), provided with a discharge through hole (19), in which a second valve seat (20) is formed while, under said baffle (19.1), said fourth chamber (A4) communicates with a discharge pipe (23), open toward the outside of the rigid body (1), and wherein said fourth chamber (A4) is axially aligned and communicating hydraulically with said third chamber (A3) and with said discharge hole (19) having said second valve seat (20);
- superiorly to said baffle (19.1), a discharge channel (21), which communicates directly with said second chamber (A2) and, through said discharge hole (19), with said fourth chamber (A4);
**in that**, moreover, it comprises:
- a non-return assembly (2), arranged in said second chamber (A2) and comprising first plug means (27) and a corresponding gasket (29), which produce a hydraulic seal on said first valve seat (12) and maintain said intake hole (11) normally closed;
- cap means (8, 8a, 8b, 8c, 8d), provided to close the lower part of said third chamber (A3);
- second plug means (5) with corresponding gasket (4), arranged in said fourth chamber (A4) and which are thrust in sealed condition against said second valve seat (20) by means of said fluid fed into said third chamber (A3) and/or by means of the elastic means (6, M) arranged between said cap means (8, 8a, 8b, 8c, 8d) and said second plug means (5, O, 5a, 5c, 5d, 5e).

2. The safety device (V) according to claim 1, **characterized in that** said non-return assembly (2) is configured so that, with said boiler (BO) operating and with hot water being drawn, a flow (F) of cold water enters said first chamber (A1) of the first cavity (C1) and lifts said first plug means (27), entering the boiler (BO) through said second chamber (A2), while, when no hot water is being drawn and with the flow (F) of cold water stopped, said non-return assembly (2) closes automatically, when the pressure of the water present in said second chamber (A2) is equal to or greater than the pressure present in said first chamber (A1), and the water contained in the boiler (BO) cannot flow out through said first chamber (A1), and **in that** said non-return assembly (2) and said second plug means (5, O, 5a, 5c, 5d, 5e) are configured so that the fluid in said boiler (BO), when it is subjected to an overpressure (S) and cannot find an escape route deriving from the user drawing hot water, affects not only said boiler (BO), but also said second chamber (A2) and related discharge channel (21), and said non-return assembly (2), which closes said intake hole (11), does not allow the backflow of hot water into said first chamber (A1) and into the cold water delivery pipe (T1), as the pressure that prevails in said second chamber (A2) is greater than the pressure that prevails in said first chamber (A1), while the overpressure (S) present in said discharge channel (21) also affects said plug means (5, O, 5a, 5c, 5d, 5e), which close said discharge hole (19) by means of the corresponding gasket (4) on the respective second valve seat (20) and, at a predetermined value of said overpressure (S), said plug means (5, O, 5a, 5c, 5d, 5e) open, allowing the volume of water that caused said overpressure (S) to flow out into said fourth chamber (A4) and outside the rigid body (1) through said discharge pipe (23).

3. The safety device (V) according to claim 1 and/or 2, **characterized in that** said non-return assembly (2) comprises a ring nut (24) provided with a central hole (25), into which an axial stem (26) of said first plug means (27), which are disc shaped, is inserted and guided, and with elastic means (28) arranged between said first plug means (27) and said ring nut (24), wherein said first plug means (27) and said ring nut (24) are provided with respective openings (30, 31) to allow the passage of fluid, and wherein said ring nut (24) is screwed relative to said internal thread (13) of the rigid body (1) and determines a slight preloading of said elastic means (28), which thrust said first plug means (27) downward and hold a gasket (29) tightly, producing a hydraulic seal on said first valve seat (12), maintaining said fluid intake hole (11) from the first chamber (A1) to the second chamber (A2) normally closed.

4. The safety device (V) according to claim 1, 2 and/or 3, **characterized in that** said distributor cap means (8), comprise:
- at the lower end, a head (47) with external annular seat (48) for an annular sealing gasket (7), a hexagonal socket (49) for a hex key, and an external thread (50),
- in intermediate position, openings (51), communicating radially with a blind axial hole (52), which ends at the upper part of said cap means (8), and
- at the upper end, a groove (53) and a shoulder (54).

5. The safety device (V) according to one or more of the preceding claims, **characterized in that** said second plug means (5, O, 5a, 5c, 5d, 5e) comprise a body (5, O, 5a, 5c, 5d, 5e) arranged to move, with seal, in said fourth chamber (A4) and configured as plug (5), or as piston-plug (5a, 5c, 5d, 5e, O), provided with respective sealing gasket means (G, G").

6. The safety device (V) according to one or more of the preceding claims, **characterized in that** said elastic means arranged between said distributor cap means (8) and said second plug means (5) are configured as elastic membrane (6).

7. The safety device (V) according to claims 4 and 6, **characterized in that** said elastic membrane elastic means (6) have a cover structure, closed at the top (45), and comprising a cylindrical lateral wall having at the base a rim (46), projecting outward and inward and which acts as ring gasket; wherein said membrane means (6) are elastically fitted by means of said rim portion (46) into said groove (53) of said distributor cap means (8), against the shoulder (54) of these cap means, said distributor cap means (8) are engaged by screwing relative to the internal thread (16) of said rigid body (1) and said shoulder (54) of said distributor cap means (8) compresses said rim (46) of said membrane means (6) against said upper shoulder (18) of said third chamber (A3).

8. The safety device (V) according to claim 1, **characterized in that** said rigid body (1) comprises, in said third chamber (A3), a through hole (17), internally threaded, and **in that** a maximum pressure limiting device (3) is connected to said rigid body (1) by means of screwing in said through hole (17).

9. The safety device (V) according to claim 8, **characterized in that** said maximum pressure limiting device (3) comprises a cap (32), internally threaded and having a discharge orifice (33) with related inner sealing seat (34), and has an external thread (35), engaged in the corresponding thread of said through hole (17), and a hexagonal head (36), and comprises, in the cavity of said cap (32), a gasket (37), a spring (38) and a rod-shaped plug (39), with a groove (40) for a gasket (41).

10. The safety device (V) according to one or more of the preceding claims, **characterized in that** the inner diameter of said discharge hole (19) is smaller than the inner diameter of said fourth chamber (A4).

11. The safety device (V) according to one or more of claims 1 to 9, **characterized in that** said elastic means (6, M), arranged between said cap means (8, 8a, 8b, 8c, 8d) and said second plug means (5, O, 5a, 5c, 5d, 5e) maintain, with the boiler (BO) switched off, said second plug means (5, O, 5a, 5c, 5d, 5e) closed on said second valve seat (20) of said discharge hole (19), and **in that** said elastic means (6, M) are configured so that the value of the opening pressure of said second plug means (5, O, 5a, 5c, 5d, 5e), relative to said second valve seat (20) of said discharge hole (19), corresponds to the value of the force produced by said elastic means (6, M) against said second plug means (5, O, 5a, 5c, 5d, 5e).

12. The safety device (V) according to one or more of the preceding claims, **characterized in that** elastic means which urge said elastic membrane means toward said second plug means (5) are arranged between said distributor cap means (8) and said elastic membrane means.

13. The safety device (V) according to one or more of the preceding claims, **characterized in that** it comprises emptying means of said boiler (BO) comprising cap means (8c) and piston-plug means (5c) interconnected with force by means of undercut slots having geometric interference, such as to allow coupling thereof, while preserving the freedom of axial movement relative to one another.

14. The safety device (V) according to one or more of the preceding claims 1 to 12, **characterized in that** it comprises emptying means of said boiler (BO) comprising a first spring (M), arranged between said cap means (8d) and said plug means (5d), and a second spring (M1), above said plug means (5d) and which has the task of disengaging said plug means (5d) if, unscrewing said cap means (8d), the spring (M) ceases to exert its driving force.

15. The safety device (V) according to one or more of the preceding claims 1 to 12, **characterized in that** it comprises emptying means of said boiler (BO), comprising external control means, including screw means (VI) provided with knurling (Z) to be gripped manually, configured to act by pressing axially on said piston-plug means (5e), or in a different configuration, by interacting like a cam on said piston-plug means.

16. The safety device (V) according to one or more of the preceding claims, **characterized in that** it comprises a maximum pressure limiting device (3) integrated in cap means (8b), provided with a hexagonal socket (49A) for a hex key, with a seat (48A) for a gasket (7A), with a through orifice (33A) and with an external thread (50A), wherein said hexagonal socket (49A) has a valve seat (34A), on which plug means (39a) close, provided with gasket (41A) housed in a respective seat (40A) and maintained normally closed by means of a spring (38A) retained by means of an arrowhead (pf).
